# EUROPEAN PATENT APPLICATION

(11) **EP 1 094 230 A2**
(43) Date of publication of application: **25.04.2001**
(21) Application number: 00303917.9
(22) Date of filing: 10.05.2000
(51) Int. Cl.: F16B 11/00

(54) **Socket and spigot coupling using a bonding agent**

(30) Priority: 19.10.1999 GB 9924638
(71) Applicant: Marconi Electronic Systems Limited, Stanmore, Middlesex HA7 4LY (GB)
(72) Inventor: Browning, Ernest Frederick, Whitstable, Kent CT5 4NU (GB)
(74) Representative: Hoste, Colin Francis

(57) **Abstract**

A coupling assembly 10 comprises a first dependent portion 11 having an entry mouth 12 leading to a receptive area 13. The assembly 10 further comprises a second portion 14 arranged to be inserted into mouth 12 and to fit within area 13. A second end 16 of the second portion 14 provides a fixing for an overhead assembly, not illustrated. The first portion 11 also comprises a bracket 17 arranged to be fixed to a portion of an airframe 18. The first portion 11 hangs downwardly from the airframe 18 such that its entry mouth also faces downwardly. A closure element 20 passes over a section of the second portion 14 such that when it is inserted in the area 13 the element 20 abuts the mouth 12 thereby forming a seal between the mouth 12 and the second portion 14 so as to close the receptive area 13. A bonding agent 23 can be introduced within the clearance between the first and second portions 11 and 14.

## Description

The present invention relates to a coupling assembly and a method of coupling a first dependant portion with a second portion.

A head up display assembly provides a user, typical a pilot, with primary flight, navigation and guidance information within a forward field of view of the user. This is accomplished by reflecting an image generated by an image generator, for example a cathode ray tube or liquid crystal display, on to a combiner positioned within the field of view of the user. The user views the image reflected by the combiner at infinity and views a scene through the combiner, such that the image appears to overlay the scene.

Typically, such a combiner has been secured to an airframe of an aircraft using a mounting assembly comprising means to bolt the mounting assembly to the airframe and means to bolt the combiner and associated driving unit to the mounting assembly. Such mounting assemblies are commonly referred to as mounting trays. However, such mounting assemblies require the use of bolts that are semi-permanent fixtures prone to vibration and tampering.

It is an object of the present invention to obviate or mitigate the disadvantages associated with the prior art.

According to a first aspect of the present invention a coupling assembly comprises a first dependant portion arranged to have an entry mouth and a receptive area, a second portion arranged to be inserted into the entry mouth and fit within the receptive area, a closure element arranged around a section of the second portion and arranged to engage the entry mouth and to close the receptive area of the first dependant portion, and a bonding agent arranged to be introduced into the receptive area and to bond the first dependant portion and second portion to one another.

In this manner, the bonding agent is prevented from leaving the receptive area via the entry mouth by the closure element. It will be understood that there is a degree of clearance between the first dependant portion and the second portion such that a first element secured to the first dependant portion and a second element secured to the second portion can be aligned in a precise manner. The clearance between the first dependant portion and the second portion allows six degrees of freedom for alignment of the first and second elements. As there is clearance between the first dependant portion and the second portion the bonding agent can leave the receptive area thereby inhibiting a proper fixing between the first dependant portion and the second portion. Accordingly, the closure element allows the coupling between the first dependant portion and the second portion to be effected by inhibiting the bonding agent for leaving the receptive area.

Preferably the closure element may be a washer. The entry mouth may substantially downwardly facing. In this manner, a coupling between the first dependant portion and the second portion can be effected without the bonding agent flowing downwardly from the receptive area and through the entry mouth.

The receptive area may have a first aperture and the bonding agent may be arranged to be injected into the receptive area through the first aperture. The receptive area may have a second aperture arranged to allow excess bonding agent to leave the receptive area.

The first dependant portion may be a socket and the second portion is a ball. The ball may have a grooved arrangement to promote the flow of the bonding agent. Alternatively, the first dependant portion may be a socket and the second portion may be a spigot. The spigot may have a grooved arrangement to promote the flow of the bonding agent.

The second portion may have an aperture formed therein and the first dependant portion may have a pair of corresponding apertures arranged to allow a nut and bolt assembly to pass therethrough, wherein the bolt passes through one of the pair of apertures associated with the first dependant portion, the aperture formed in the second portion and through the other of the pair of apertures for mating with the nut. Preferably, the aperture formed in the second portion and pair of apertures may allow the first dependant portion and second portion to move with respect to one another prior to the induction of the bonding agent.

A jig may be arranged to retain the first dependant portion, second portion and the closure element in position during the introduction of the bonding agent.

The first dependant portion may be arranged to be mounted to an airframe of an aircraft prior to coupling with the second portion and the second portion is arranged to carry an overhead assembly. Alternatively, the second portion may be arranged to be mounted to an airframe of an aircraft prior to coupling with the first dependant portion and the first dependant portion may be arranged to carry an overhead assembly. A plurality of corresponding first dependant portion and second portion may be arranged to support and to allow the alignment of the overhead assembly with the airframe of the aircraft. The overhead assembly may be a mounting tray arranged to carry a combiner display.

According to a second aspect of the present invention a method of coupling a first dependant portion with a second portion includes forming an entry mouth and a receptive area in the first portion, forming and inserting the second portion in the receptive area, arranging a closure element around a section of the second portion and to engage the entry mouth and close the receptive area of the first dependant portion, and introducing a bonding agent into the receptive area to bond the first dependant portion to the second portion.

The invention will now be described, by way of example only, with reference to the accompanying drawings, in which:
Figure 1 illustrates an exploded view of coupling assembly according to a first embodiment of the present invention;
Figure 2 illustrates the coupling assembly, shown in Figure 1, in a coupling configuration;
Figure 3 illustrates an exploded view of coupling assembly according to a second embodiment of the present invention;
Figure 4 illustrates the coupling assembly, shown in Figure 3, in a coupling configuration, and
Figure 5 illustrates an exploded view of a plurality of coupling assemblies, as shown in Figures 1 to 4, used to retain an overhead assembly and combiner.

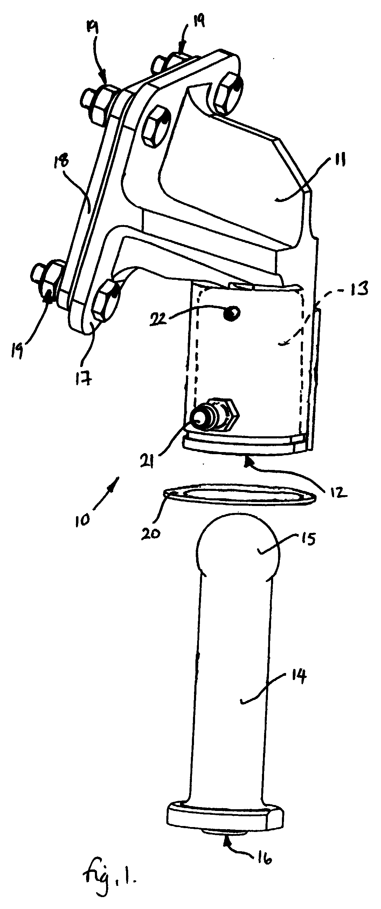

Referring to Figure 1, a first embodiment of a coupling assembly 10 comprises a first dependant portion 11 having an entry mouth 12 leading to a receptive area 13, formed within the first dependant portion 11. The coupling assembly 10 further comprises a second portion 14 arranged to be inserted into the entry mouth 12 and to fit within the receptive area 13. The second portion 14 comprises a first end 15 arranged to fit within the receptive area 13 and a second end 16 arranged to provide a fixing for an overhead assembly, not illustrated. It will be understood that the receptive area 13 of the first dependant portion 11 and the first end 15 of the second portion cooperate with one another in order to respectively form a socket and ball coupling.

The first dependant portion 11 also comprises a bracket 17 arranged to be fixed to a portion of an airframe 18 of an aircraft, not illustrated, using nut and bolt arrangements 19. It will be understood that the first dependant portion 11 hangs downwardly from the airframe 18 such that its entry mouth 12 also faces downwardly.

A closure element 20 is arranged to pass over a section of the second portion 14 such that when the second portion 14 is inserted into the receptive area 13 of the first dependant portion 11 the closure element 20 abuts the entry mouth 12 of the first dependant portion 11 thereby forming a seal between the entry mouth 12 and the second portion 14 so as to close the receptive area 13. The closure element 20 can be a washer arrangement or any other element suitable for closing the receptive area 13 between the entry mouth 12 of the first dependant portion 11 and the second portion 14.

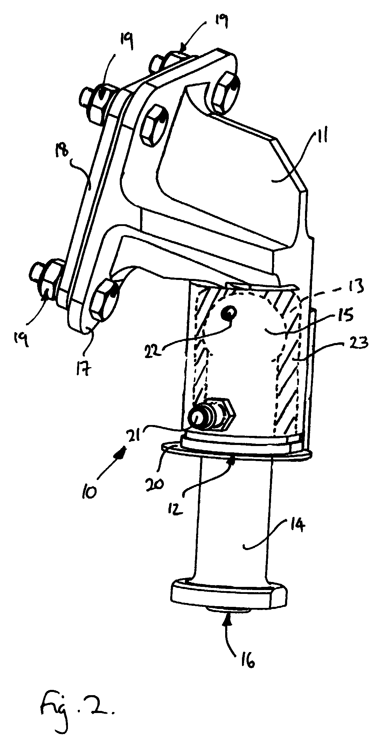

As best seen in Figure 2, wherein like references have been used to indicate similar integers to those used in Figure 1, the second portion 14 fits within the receptive area 13 and the closure element 20 seals the receptive area 13 between the entry mouth 12 and second portion 14.

Referring again to Figure 1, the receptive area 13 further comprises a first aperture 21 arranged to allow a bonding agent, not illustrated, to enter the receptive area 13. The receptive area 13 also has a second aperture 22 arranged to allow excess bonding agent, to leave the receptive area 13 once the receptive area 13 has been substantially filled with bonding agent.

The first end 15 of the second portion 14 can also have a grooved arrangement, not illustrated, to promote the flow of bonding agent around the first end 15 and the receptive area 13.

Again referring to Figure 2, the first dependant portion 11 and the second portion 14, that is the ball and socket, are arranged to allow the second portion 14 to move with respect to the first dependant portion 11 before the introduction of the bonding agent such that the first dependant portion 11 and the second portion 14 can be aligned with respect to one another. It will be understood that the bracket 17 may not be correctly aligned with the airframe 18 and that there is a degree of clearance between the first dependant portion 11 and the second portion 14 such that the airframe 18 secured to the first dependant portion 11 and the overhead assembly, not illustrated, secured to the second portion 14 can be aligned in a precise manner. The clearance between the first dependant portion 11 and the second portion 14 allows six degrees of freedom for alignment of the overhead assembly with respect to the airframe 18 to compensate for misalignment of the bracket with respect to the airframe 18. As there is clearance between the first dependant portion 11 and the second portion 14 the bonding agent can leave the receptive area thereby inhibiting a proper fixing between the first dependant portion 11 and the second portion 14. Accordingly, the closure element 20 allows the coupling between the first dependant portion 11 and the second portion 14 to be effected by inhibiting the bonding agent for leaving the receptive area 13.

When the first dependant portion 11 and the second portion 14 are correctly positioned and aligned a bonding agent 23, illustrated by the hatching in Figure 2, can be injected into the first aperture 21 and hence into the receptive area 13. The bonding agent 23 is injected into the receptive area 13 until bonding agent 23 leaves the receptive area 13 through the second aperture 22. Once the bonding agent 23 has cured, a permanent coupling is made between the first dependant portion 11 and the second portion 14.

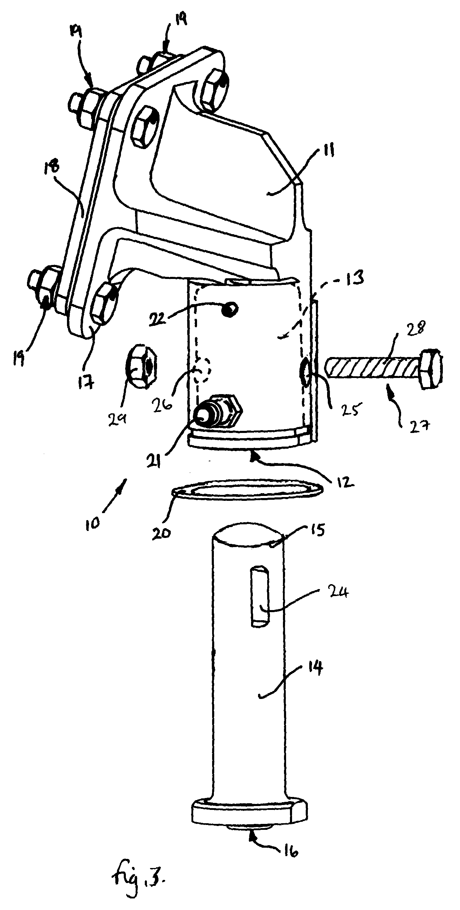

Referring to Figure 3, in which like references have been use to indicate simular integers to those used in Figure 1, a second embodiment of a coupling assembly 10 comprises a first dependant portion 11 having an entry mouth 12 leading to a receptive area 13, formed within the first dependant portion 11. The coupling assembly 10 further comprises a second portion 14 arranged to be inserted into the entry mouth 12 and to fit within the receptive area 13. The second portion 14 comprises a first end 15 arranged to fit within the receptive area 13 and a second end 16 arranged to provide a fixing for an overhead assembly, not illustrated. It will be understood that the receptive area 13 of the first dependant portion 11 and the first end 15 of the second portion cooperate with one another in order to respectively form a socket and spigot coupling.

The first dependant portion 11 also comprises a bracket 17 arranged to be fixed to a portion of an airframe 18 of an aircraft, not illustrated, using nut and bolt arrangements 19. It will be understood that the first dependant portion 11 hangs downwardly from the airframe 18 such that its entry mouth 12 also faces downwardly.

A closure element 20 is arranged to pass over a section of the second portion 14 such that when the second portion 14 is inserted into the receptive area 13 of the first dependant portion 11 the closure element 20 abuts the entry mouth 12 of the first dependant portion 11 thereby forming a seal between the entry mouth 12 and the second portion 14 so as to close the receptive area 13. The closure element 20 can be a washer arrangement or any other element suitable for closing the receptive area 13 between the entry mouth 12 of the first dependant portion 11 and the second portion 14.

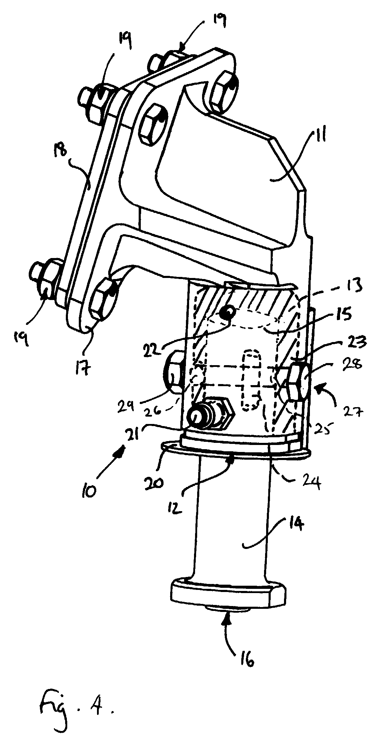

As best seen in Figure 4, wherein like references have been used to indicate similar integers to those used in Figure 3, the second portion 14 fits within the receptive area 13 and the closure element 20 seals the receptive area 13 between the entry mouth 12 and second portion 14.

Referring again to Figure 3, the receptive area 13 further comprises a first aperture 21 arranged to allow a bonding agent, not illustrated, to enter the receptive area 13. The receptive area 13 also has a second aperture 22 arranged to allow excess bonding agent, to leave the receptive area 13 once the receptive area 13 has been substantially filled with bonding agent.

The first end 15 of the second portion 14 can also have a grooved arrangement, not illustrated, to promote the flow of bonding agent around the first end 15 and the receptive area 13.

The second portion 14 has an aperture 24 formed therein and arranged to correspond with a pair of apertures 25 and 26 formed in the first dependant portion 11. The pair of apertures 25 and 26 and the aperture 24 formed in the second portion 14 are arranged to allow a nut and bolt assembly 27 to pass therethrough. That is, a bolt 28 passes through aperture 25 formed in the first dependant portion 11, then through the aperture 24 formed in the second portion and further through the aperture 26 formed in a first dependent portion 11. A nut 29 is arranged to mate with the bolt 28 after it has passed through the apertures 24, 25 and 26 to secure the bolt 28 in place. This feature provides a means of retaining the second portion 14 within the receptive area 13 of the first dependant portion 11 should the bonding agent used to couple the first dependant portion 11 and the second portion 14 together fail. The apertures 24, 25 and 26 are also arranged to allow a degree of movement between the second portion and the first dependant portion 11 before the introduction of the bonding agent such that the first dependant portion 11 and the second portion 14, that is the socket and spigot, can be aligned with respect to one another.

Figure 4 also illustrates the nut and bolt assembly 27 in place within the apertures 24, 25 and 26. It will be understood that the bracket 17 may not be correctly aligned with the airframe 18 and that there is a degree of clearance between the first dependant portion 11 and the second portion 14 such that the airframe 18 secured to the first dependant portion 11 and the overhead assembly, not illustrated, secured to the second portion 14 can be aligned in a precise manner. The clearance between the first dependant portion 11 and the second portion 14 allows six degrees of freedom for alignment of the overhead assembly with respect to the airframe 18 to compensate for misalignment of the bracket with respect to the airframe 18. As there is clearance between the first dependant portion 11 and the second portion 14 the bonding agent can leave the receptive area thereby inhibiting a proper fixing between the first dependant portion 11 and the second portion 14. Accordingly, the closure element 20 allows the coupling between the first dependant portion 11 and the second portion 14 to be effected by inhibiting the bonding agent for leaving the receptive area 13.

When the first dependant portion 11 and the second portion 14 are correctly positioned and aligned, and the nut and bolt assembly 27 secured through the apertures 24, 25 and 26 a bonding agent 23, illustrated by the hatching in Figure 4, can be injected into the first aperture 21 and hence into the receptive area 13. The bonding agent 23 is injected into the receptive area 13 until bonding agent 23 leaves the receptive area 13 through the second aperture 22. Once the bonding agent 23 has cured, a permanent coupling is made between the first dependant portion 11 and the second portion 14.

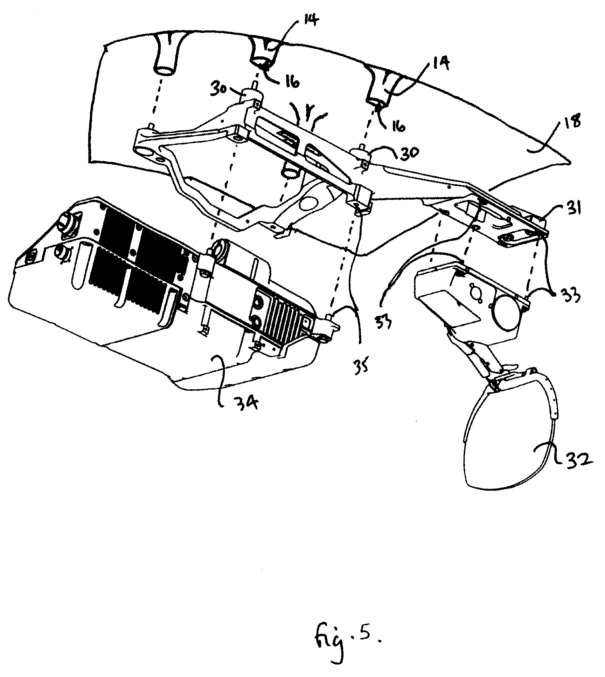

As illustrated in Figure 5, wherein like references have been used to indicate similar integers as those illustrated in Figures 1 and 3, the second end 16 of the second portion 14 provides a fixing point for a corresponding mounting position 30 associated with a mounting tray 31. It will be understood that a plurality of coupling assemblies 10 as illustrated in Figures 1 to 4, can be used to provide suitable fixing points that correspond with mounting positions 30 on a mounting tray 31. In this manner the mounting tray 31 is secured to the airframe 18 of the aircraft.

An overhead assembly such as a combiner assembly 32 can be secured to the mounting tray 31 using a suitable fixing means at points 33. Furthermore, an image generation unit 34, associated with the combiner 32 can also be secured via suitable mounting positions 35 to the mounting tray 31. It will be understood that other forms of overhead assembly can also be secured to the mounting tray 31 that can be adapted for the type of overhead assembly required to be supported from the airframe.

In this manner, a permanent fixing is provided for the mounting tray 31 with respect to the airframe 18 such that the combiner 32 or associated image generation unit 34 can be replaced without the need for realigning either the combiner assembly 32 or image generation unit 34 with respect to the axes of the airframe 18. That is, similarly manufactured combiner assembly 32 and image generation 34 can readily be interchanged without the requirement for realignment, thereby saving time when changing a combiner assembly 32 or image generation unit 34.

It will be understood that a jig, not illustrated, can be arranged to retain the first dependant portion 11, second portion 14 and closure element 20 with respect to one another during the introduction of the bonding agent 23. Furthermore, the jig may also be arranged to hold the mounting tray 31 in position with respect to axes of the airframe 18 such that when a plurality of coupling assemblies 10 are used to retain the mounting tray 31 in position the mounting tray 31 can be aligned with the axes of the airframe 18. Accordingly, an overhead assembly mounted to the mounting tray 31 can be aligned with the airframe.

Furthermore, it will be understood that although the present invention is described and is primarily intended for coupling of an overhead assembly to an airframe of an aircraft, that the invention could find applications in other environments where the fitting of an overhead assembly is required, for example in a train.

## Claims

1. A coupling assembly, comprising
a first dependant portion arranged to have an entry mouth and a receptive area,
a second portion arranged to be inserted into the entry mouth and fit within the receptive area,
a closure element arranged around a section of the second portion and arranged to engage the entry mouth and to close the receptive area of the first dependant portion, and
a bonding agent arranged to be introduced into the receptive area and to bond the first dependant portion and second portion to one another.

2. A coupling assembly, as in Claim 1, wherein the closure element is a washer.

3. A coupling assembly, as in Claims 1 or 2, wherein the entry mouth is substantially downwardly facing.

4. A coupling assembly, as in any preceding claim, wherein the receptive area has a first aperture and the bonding agent is arranged to be injected into the receptive area through the first aperture.

5. A coupling assembly, as in Claim 4, where the receptive area has a second aperture arranged to allow excess bonding agent to leave the receptive area.

6. A coupling assembly, as in any preceding claim, wherein the first dependant portion is a socket and the second portion is a ball.

7. A coupling assembly, as in Claim 6, wherein the ball has a grooved arrangement to promote the flow of the bonding agent.

8. A coupling assembly, as in Claims 1 to 5, wherein the first dependant portion is a socket and the second portion is a spigot.

9. A coupling assembly, as in Claim 8, wherein the spigot has a grooved arrangement to promote the flow of the bonding agent.

10. A coupling assembly, as in any preceding claim, wherein the second portion has an aperture formed therein and the first dependant portion has a pair of corresponding apertures arranged to allow a nut and bolt assembly to pass therethrough, wherein the bolt passes through one of the pair of apertures associated with the first dependant portion, the aperture formed in the second portion and through the other of the pair of apertures for mating with the nut.

11. A coupling assembly, as in Claim 10, wherein the aperture formed in the second portion and pair of apertures allow the first dependant portion and second portion to move with respect to one another prior to the induction of the bonding agent.

12. A coupling assembly, as in any preceding claim, wherein a jig is arranged to retain the first dependant portion, second portion and the closure element in position during the introduction of the bonding agent.

13. A coupling assembly, as in any preceding claim, wherein the first dependant portion is arranged to be mounted to an airframe of an aircraft prior to coupling with the second portion and the second portion is arranged to carry an overhead assembly.

14. A coupling assembly, as in Claims 1 to 12, wherein the second portion is arranged to be mounted to an airframe of an aircraft prior to coupling with the first dependant portion and the first dependant portion is arranged to carry an overhead assembly.

15. A coupling assembly, as in Claims 13 or 14, wherein a plurality of corresponding first dependant portion and second portion are arranged to support and to allow the alignment of the overhead assembly with the airframe of the aircraft.

16. A coupling assembly, as in Claim 13 to 15, wherein the overhead assembly is a mounting tray arranged to carry a combiner display.

17. A coupling assembly substantially as illustrated in and/or described with reference to the accompanying drawings.

18. A method of coupling a first dependant portion with a second portion, including forming an entry mouth and a receptive area in the first portion, forming and inserting the second portion in the receptive area, arranging a closure element around a section of the second portion and to engage the entry mouth and close the receptive area of the first dependant portion, and introducing a bonding agent into the receptive area to bond the first dependant portion to the second portion.

19. A method of coupling substantially as illustrated in and/or described with reference to the accompanying drawings.
